# FASCICULE DE BREVET EUROPEEN

(11) **EP 2 541 125 B1**
(45) Date de publication et mention de la délivrance du brevet: **14.09.2016**
(21) Numéro de dépôt: 12173520.3
(22) Date de dépôt: 26.06.2012
(51) Int. Cl.: F21S 8/02, F21V 25/00, F21V 21/04, F21V 25/12, F21V 15/02

(54) **Coiffage de lampe pour plafond**
Abdeckung einer Deckenlampe
Ceiling lamp capping

(30) Priorité: 30.06.2011 FR 1155891
(43) Date de publication de la demande: 02.01.2013
(73) Titulaire: Hellermanntyton, 78190 Trappes (FR)
(72) Inventeur: Rodriguez, Manuel, 94100 Saint Maur des Fosses (FR); Cherdo, Pascal, 78650 Beynes (FR)
(74) Mandataire: Cabinet Plasseraud

(56) Documents cités:
- EP-A2- 0 427 498
- DE-A1- 4 324 057
- DE-A1- 10 335 515
- DE-A1- 19 937 617
- FR-A- 1 452 709

## Description

L'invention concerne le coiffage de lampe pour plafond et en particulier un dispositif de coiffage à branches pour lampe de type spot de plafond, apte à être monté dans un plafond.

On connaît des dispositifs de coiffage de lampe comprenant des branches écartées l'une de l'autre, permettant notamment d'isoler thermiquement la lampe d'une couche de matière isolante de type bande ou nappe disposée dans le plénum ou l'épaisseur du plafond. L'écartement des branches facilite notamment le montage et la dispersion de la chaleur émise par la lampe.

Les documents DE 103 35 515, DE 199 37 617, DE 43 24 057, EP 0427 498 et FR 1 452 709 décrivent des exemples de dispositifs de coiffage.

De tels dispositifs de coiffage ne conviennent pas pour une matière isolante projetée dans le plenum ou dans l'espace interne du plafond, par exemple à forme de flocons. En effet, la matière isolante s'introduit dans le dispositif de coiffage et ne permet plus d'isoler thermiquement la lampe de la matière isolante.

Il existe donc un besoin pour un coiffage de lampe de plafond qui puisse permettre de concilier montage aisé et isolation thermique.

Il est proposé un dispositif de coiffage de lampe destiné à être installé dans un plafond, comprenant un ensemble de branches d'un premier type, espacées les unes des autres, cet ensemble étant apte à coiffer la lampe, caractérisé en ce que le dispositif de coiffage comporte au moins une branche d'un deuxième type de conception différente de celles des branches du premier type, flexible et disposée dans l'espace entre deux branches du premier type adjacentes.

L'ensemble de branches du premier type et cette au moins une branche du deuxième type peuvent ainsi empêcher une matière isolante projetée de pénétrer à l'intérieur du dispositif de coiffage lorsque ce dispositif est monté dans le plénum ou plus généralement dans l'espace interne du plafond.

La ou les branches du deuxième type étant flexibles, elles ne constituent pas une gêne pour l'accès à la lampe.

La distance entre la branche du deuxième type et chacune des branches du premier et/ou deuxième type adjacentes peut par exemple varier entre 1 à 7 mm inclus, selon la texture de la matière isolante projetée. Cette distance inter-branches peut par exemple être choisie inférieure de 20% au diamètre médian des particules de matière

isolante. L'espace inter-branches est ainsi suffisamment étroit pour limiter la pénétration de matière isolante projetée à l'intérieur du dispositif de coiffage.

Il en résulte que la ou les branches flexibles du deuxième type obture(nt) relativement à la matière isolante le volume à l'intérieur du dispositif de coiffage, dit volume interne, et donc empêche(nt) la matière isolante projetée de pénétrer ce volume interne dans lequel se trouve la lampe. La lampe peut donc être montée dans le dispositif de coiffage sans avoir à retirer de matière isolante à l'intérieur de ce dispositif de coiffage et sans risque que de la matière isolante ne pénètre ce volume interne.

Par « de conception différente », on entend qu'une branche du deuxième type a une forme différente de celle(s) des branches du premier type. Les branches du deuxième type peuvent avoir des formes similaires ou non, pourvu qu'elles soient suffisamment flexibles pour permettre un accès manuel à la lampe. Les branches du premier type peuvent avoir des formes similaires ou non. L'ensemble de branches du premier type peut assurer un maintien mécanique suffisant pour coiffer la lampe, et en particulier pour supporter de la matière isolante sous forme de nappe et/ou de matière projetée.

Les branches du premier type et la ou les branche(s) du deuxième type définissent avantageusement une enveloppe de coiffage à forme générale de cloche, apte à loger la lampe et à protéger la lampe de la matière isolante projetée. Avantageusement cette enveloppe est apte à être fixée au système de faux-plafond.

De plus, le caractère flexible de la ou des branche(s) du deuxième type peut permettre le montage des éléments de fixation de la lampe, par exemple le rabattement latéral externe des pattes élastiques de fixation de la lampe, lampe spot de plafond en particulier, au bord d'un trou défini dans une dalle de faux-plafond ou plus généralement dans le plafond, ce trou correspondant à l'emplacement de la lampe.

Pour un espace entre deux branches du premier type adjacentes, on peut prévoir de disposer aucune branche du deuxième type, une branche du deuxième type, deux branches du deuxième type ou même davantage.

Le dispositif de coiffage peut avantageusement comprendre plusieurs branches du deuxième type.

Avantageusement, pour chaque espace entre deux branches du premier type adjacentes, on peut prévoir une ou plusieurs branche(s) du deuxième type disposée(s) dans cet espace.

Au moins une (et avantageusement toutes les) branche du deuxième type peut avantageusement être sécable à la main, de préférence à sa base ou sur une partie de la longueur de cette branche du deuxième type.

Au moins une (et avantageusement toutes les) branche du deuxième type peut comporter à cet effet des points de rupture, par exemple formés dans l'épaisseur de cette deuxième branche en sorte de permettre le passage à son endroit d'un élément de la lampe, par exemple d'un boîtier de connexion de lampe ou d'un câble électrique d'alimentation de la lampe.

Au moins une (et avantageusement toutes les) branche du deuxième type est avantageusement d'une épaisseur limitée propre à favoriser la flexion de cette deuxième branche, par exemple de 0,5 à 1,5 mm.

Au moins une (et avantageusement toutes les) branche du deuxième type est avantageusement conformée en continuité de forme de l'enveloppe définie par les premières branches lorsque le dispositif de coiffage est monté au plafond, par exemple à forme de cloche. Par exemple, et en particulier, lorsque les branches du premier type sont contraintes en fixation au trou de plafond et les branches du deuxième type sont laissées non contraintes, l'écart selon une direction radiale entre les branches du deuxième type et une enveloppe définie par les branches du premier type peut par exemple être inférieur ou égal à 15 millimètres, avantageusement à 7 millimètres, avantageusement à 5 millimètres, avantageusement à 3 millimètres.

Par exemple, dans le cas de branches sensiblement rectilignes, l'angle entre la direction verticale et les branches flexibles du deuxième type et à peu prés égal à l'angle entre la direction verticale et les branches du premier type. Par « à peu prés égal », on entend une différence inférieure ou égale en valeur absolue à 20°, avantageusement à 15°, avantageusement à 10°, avantageusement à 5°, avantageusement à 2°.

Au moins une (et avantageusement toutes les) branche du deuxième type peut être à forme de plaquette, par exemple légèrement courbée ou pliée longitudinalement pour s'inscrire dans l'enveloppe du dispositif de coiffage.

Au moins une (et avantageusement toutes les) branche du deuxième type a avantageusement une longueur inférieure à celle des branches du premier type en sorte d'être disposée au montage légèrement au-dessus du bord supérieur du trou correspondant à l'emplacement de la lampe, par exemple légèrement au-dessus d'une dalle d'un système de faux- plafond.

Ainsi, l'extrémité inférieure de la branche du deuxième type lorsque le dispositif de coiffage est monté au plafond peut être disposée à environ 1 à 5 mm du bord supérieur du trou, par exemple de la surface d'une dalle ou plaque, ce qui permet le débattement latéral de cette branche, si nécessaire.

La branche du deuxième type est avantageusement issue de moulage en matière synthétique, par exemple en polyamide ininflammable, en une seule pièce avec le dispositif de coiffage. Ce moulage en une seule pièce du dispositif de coiffage facilite la fabrication.

La branche du deuxième type peut également être découpée ou découpable longitudinalement en deux ou plusieurs parties.

Le dispositif de coiffage peut être monté, par exemple encastré, dans un système de faux-plafond de type à dalles ou plaques et/ou ossature (suspendue ou fixée par au autre moyen), mais l'invention n'est pas limitée aux systèmes de faux-plafond. On pourrait par exemple prévoir le montage du dispositif de coiffage dans un plafond classique, par exemple à poutres, dans l'épaisseur du plafond. Le plafond comporte une couche basse, par exemple un ensemble de dalles reposant sur une ossature support ou des plaques de Placoplatre, cette couche basse étant disposée de façon à ménager un espace interne susceptible de recevoir de la matière isolante sous forme de nappe, projetée et/ou autre.

L'invention n'est en rien limitée par le type de faux-plafond dans lequel le dispositif de coiffage est installé.

L'invention pourra notamment trouver des applications dans les plafonds et faux-plafonds d'habitation, de bureaux, de parties communes d'immeubles ou autre.

La lampe est montée, par exemple encastrée ou non, dans le plafond.

Le dispositif de coiffage peut être monté encastré dans le plafond, en l'enfonçant (depuis le dessous vers le dessus) dans un orifice de la couche basse du plafond correspondant à un emplacement de lampe, ou bien encore simplement posé par en-dessus, sur la couche basse du plafond. Dans le premier cas, il peut être intéressant de prévoir aux extrémités des branches du premier type des plaquettes externes d'arrêt destinées à venir en butée contre le rebord de l'orifice de la couche basse.

Il est également proposé un plafond comportant au moins un dispositif de coiffage de lampe tel que décrit ci dessus. Ce plafond peut par exemple comprendre un système de faux-plafond comprenant en outre des éléments classiques de faux-plafond, par exemple une ossature comprenant par exemple des longerons, des dalles ou plaques de faux-plafond, des éléments pour suspendre l'ossature, des lampes encastrables, et/ou autres.

Un mode de réalisation de l'invention est à présent décrit à titre d'exemple non limitatif en référence aux dessins annexés sur lesquels :

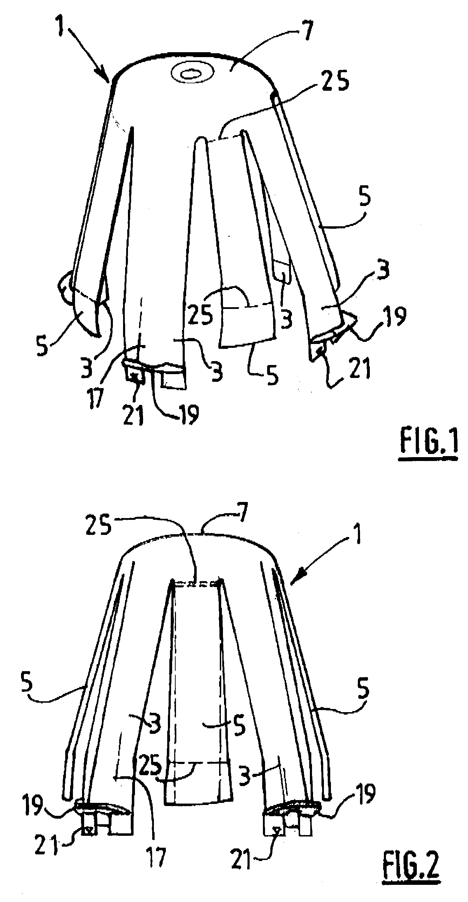

- la fig. 1 est une vue en perspective d'un dispositif de coiffage de lampe selon le mode de réalisation précité de l'invention,
- la fig. 2 est une vue en élévation du dispositif de coiffage selon la figure 1, et
- la fig. 3 est une vue analogue à la figure 2 du dispositif de coiffage une fois installé.

Avec référence aux dessins, un dispositif de coiffage de lampe 1 selon un mode de réalisation de l'invention, comprend quatre premières branches identiques 3 et quatre deuxièmes branches identiques 5 reliées à une plaquette supérieure 7 et régulièrement réparties autour de cette plaquette 7 selon une enveloppe à forme générale de cloche.

Ce dispositif de coiffage 1 est en matière plastique ininflammable, étant issu de moulage par exemple en polyamide ininflammable.

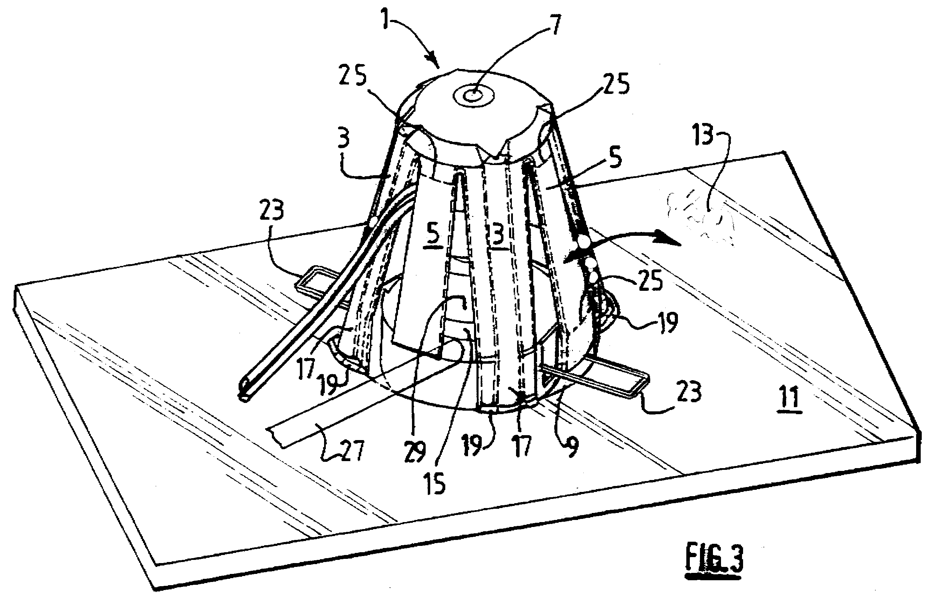

Le dispositif de coiffage 1 est destiné à être encastré (figure 3) dans un trou 9 de système de faux-plafond 11, en particulier un faux-plafond 11 de type à plaques ou dalles. De la matière isolante 13 à forme de flocons ou analogue projetée à l'intérieur du faux-plafond permet d'assurer l'isolation. Ce dispositif de coiffage 1 lorsqu'il est installé est apte à loger une lampe 15, laquelle est fixée au trou 9 du faux-plafond 11, et permet d'isoler la lampe 15 de la matière isolante du faux-plafond (sans risque de surchauffe de la lampe).

Les premières branches 3 sont pourvues chacune d'une nervure longitudinale inférieure 17 leur conférant de la rigidité, ces branches pouvant fléchir au niveau de leur liaison à la plaquette 7. Ces premières branches 3 sont également pourvues chacune au niveau de leur extrémité d'une plaquette externe d'arrêt 19 en saillie transversalement relativement à la nervure 17 et destinée à être appliquée au bord supérieur du trou 9 du faux-plafond, et d'un picot externe 21 à leur extrémité inférieure destiné à venir en prise, au montage, dans l'épaisseur de la plaque de plafond 11.

Les deuxièmes branches 5 sont à forme de plaquette pliée longitudinalement pour s'inscrire dans l'enveloppe de cloche du dispositif de coiffage. Les deuxièmes branches 5 ont une longueur inférieure à celle des premières branches 3, s'étendant sensiblement légèrement au-dessus de la plaquette externe d'arrêt 19 des premières branches (environ 1 à 5 mm au dessus), en sorte d'être disposées au montage légèrement au-dessus de la plaque de plafond 11 (environ de 1 à 5 mm au-dessus de la surface supérieure de cette plaque).

Les deuxièmes branches 5 sont relativement fines, par exemple de 0,5 à 1,5 mm d'épaisseur selon la taille du dispositif de coiffage et peuvent ainsi fléchir facilement, d'une part sur leur longueur et d'autre part relativement à la plaquette supérieure 7 du dispositif de coiffage.

Ces deuxièmes branches 5 sont distantes chacune des premières branches 3 adjacentes, d'une distance égale à environ 2 à 9 mm en sorte qu'au montage du dispositif de coiffage 1 au plafond 11 et après resserrement de celui-ci dans le trou correspondant 9 de plafond, cette distance ne soit plus que environ 1 à 7 mm selon la taille du dispositif de coiffage.

A cette distance de chacune des premières branches 3 (environ 1 à 7 mm), les deuxièmes branches 5 empêchent la matière isolante 13 (à forme de flocons) projetée dans le plenum de pénétrer à l'intérieur du dispositif de coiffage 1.

La lampe 15 peut donc être montée dans le dispositif de coiffage 1 par le trou 9 de plafond sans avoir à retirer de la matière isolante ou sans risquer que de la matière isolante ne s'y infiltre par la suite.

De plus, le montage des lampes spots 15 est facilité par le fait que les pattes de fixation 23 de ces lampes, rabattables elastiquement au bord du trou 9 de plafond, peuvent être actionnées par repoussement latéral externe de flexion des deuxièmes branches 5 (selon la flèche), les deuxièmes branches 5 repoussées chacune au passage de la patte 23 revenant ensuite à leur position d'origine dès l'engagement de la patte de fixation 23 au bord de trou 9 de plafond.

De même, ces deuxièmes branches 5 étant sécables manuellement en divers endroits de leur longueur, par exemple par des points de rupture 25 formés dans leur épaisseur transversalement à la longueur, il est aisé de faire passer un câble 27 d'alimentation de la lampe ou un autre élément, par exemple un boîtier de connexion de lampe (non représenté), par cette deuxième branche 5 coupée à la dimension adéquate (à sa base selon les points de rupture 25).

Le montage d'un dispositif de coiffage 1 et de la lampe correspondante 15 est à présent décrit en référence à la figure 3.

Le trou 9 de plafond correspondant au dispositif de coiffage 1 étant percé dans la plaque de plafond 11, il s'agit d'enfoncer le dispositif de coiffage 1 dans le trou 9. Les branches 3,5 fléchissent vers l'intérieur au passage du dispositif de coiffage 1 dans le trou 9.

Les plaquettes d'arrêt 19 des premières branches 3 permettent d'arrêter l'enfoncement du dispositif de coiffage 1 en venant buter sur le bord inférieur du trou 9. A ce moment, on peut agir sur chacune des premières branches 3 successivement pour faire passer la plaquette d'arrêt 19 dans le trou 9 et en sorte que cette plaquette d'arrêt 19 s'applique sur le bord supérieur du trou 9, puis on enfonce le picot 21 dans la tranche du trou 9.

Dès que le dispositif de coiffage 1 est monté, on peut monter la lampe 15 en enfonçant son support 29 (culot) préalablement relié au câble d'alimentation 27 dans le trou 9, puis en actionnant les pattes de fixation 23 en rabattement sur le bord supérieur du trou 9, solidairement à ce trou 9. Les pattes de fixation 23 sont rabattues sur le bord supérieur du trou 9 à l'endroit des deuxièmes branches 5, repoussant ces dernières lors du rabattement. Après le rabattement les deuxièmes branches 5 reviennent élastiquement à leur position d'origine.

La lampe est alors montée dans le dispositif de coiffage.

Pour une lampe à LED (non représenté), celle-ci est montée avec son culot relié au câble d'alimentation, pattes relevées dans le trou 9 de plafond puis en passant dans le trou les pattes retombent sur le bord supérieur du trou 9 solidarisant la lampe au faux-plafond.

Le dispositif de coiffage forme ainsi une enveloppe autour de la lampe, dans laquelle la matière isolante projetée ne pourra pas pénétrer. Le risque d'échauffement de la lampe est ainsi réduit.

Des variantes de réalisation entrent dans le cadre de l'invention. Ainsi, plusieurs deuxièmes branches 5 peuvent être disposées entre deux premières branches adjacentes 3 ou chacune des deuxièmes branches 5 peut être découpée longitudinalement en deux ou plusieurs parties.

Dans la présente demande, les termes « haut », « bas, « supérieur », « inférieur » etc. sont à prendre dans le sens habituel de ces termes, le vecteur de gravité étant dirigé du haut vers le bas, pour un dispositif disposé sur une couche de plafond horizontale selon des conditions normales d'utilisation. Bien entendu, le dispositif pourra être orienté différemment, notamment lors de son transport.

## Revendications

1. Dispositif de coiffage de lampe destiné à être installé dans un plafond (11), comprenant un ensemble de branches d'un premier type (3), espacées les unes des autres, ledit ensemble étant apte à coiffer la lampe (15), le dispositif (1) comportant en outre au moins une branche d'un deuxième type (5) de forme différente de celle(s) des branches du premier type (3), flexible et disposée dans l'espace entre deux branches du premier type adjacentes (3), **caractérisé en ce qu'** au moins une branche du deuxième type (5) a une longueur inférieure à celle des branches du premier type (3) en sorte d'être disposée au montage de 1 à 5mm au-dessus d'une couche basse du plafond (11).

2. Dispositif de coiffage de lampe selon la revendication 1, **caractérisé en ce que** :
- les branches du premier type (3) et les branches du deuxième type (5) définissent une enveloppe de coiffage à forme générale de cloche, formant un volume interne apte à loger la lampe, et
- les branches du deuxième type (5) obturent le volume interne.

3. Dispositif de coiffage de lampe selon la revendication 1 ou 2, **caractérisé en ce qu'**au moins une branche du deuxième type (5) est sécable.

4. Dispositif de coiffage de lampe selon la revendication 3, **caractérisé en ce qu'**au moins une branche du deuxième type (5) comporte des points de rupture (25).

5. Dispositif de coiffage de lampe selon l'une des revendications précédentes, **caractérisé en ce qu'**au moins une branche du deuxième type (5) est conformée en continuité de forme de l'enveloppe définie par les branches du premier type (3) lorsque le dispositif de coiffage (1) est monté au plafond.

6. Dispositif de coiffage de lampe selon l'une des revendications précédentes, **caractérisé en ce que** la distance entre la branche du deuxième type (5) et chacune des branches adjacentes (3) est comprise entre 1 à 7 mm inclus.

7. Dispositif de coiffage de lampe selon l'une des revendications précédentes, **caractérisé en ce que** ladite au moins une branche du deuxième type (5) est issue de moulage en matière synthétique en une seule pièce avec le dispositif de coiffage (1).

8. Dispositif de coiffage de lampe selon la revendication 7, **caractérisé en ce que** la matière synthétique est en polyamide ininflammable.

9. Dispositif de coiffage de lampe selon l'une des revendications précédentes, **caractérisé en ce qu'**au moins une branche du deuxième type (5) est découpée longitudinalement en deux ou plusieurs parties.

10. Dispositif de coiffage de lampe selon l'une des revendications précédentes, **caractérisé en ce qu'**au moins une branche du deuxième type (5) est à forme de plaquette.

11. Dispositif de coiffage de lampe selon l'une des revendications précédentes, **caractérisé en ce que** les branches du premier type n'ont pas des formes similaires.

12. Dispositif de coiffage de lampe selon l'une des revendications précédentes, **caractérisé en ce que**, pour un espace entre deux branches du premier type adjacentes, aucune branche du deuxième type, une branche du deuxième type, deux branches du deuxième type ou davantage sont disposées entre deux branches du premier type adjacentes.

13. Plafond comportant au moins un dispositif de coiffage de lampe selon l'une des revendications précédentes.

## Patentansprüche

1. Lampen-Abdeckungseinrichtung, die dazu bestimmt ist, in einer Decke (11) installiert zu werden, umfassend eine Anordnung von Armen von einem ersten Typ (3), die voneinander beabstandet sind, wobei die Anordnung dazu geeignet ist, die Lampe (15) abzudecken, wobei die Einrichtung (1) weiter wenigstens einen Arm von einem zweiten Typ (5) mit einer von derjenigen bzw. denjenigen der Arme vom ersten Typ (3) verschiedenen Form umfasst, der flexibel und in dem Raum zwischen zwei benachbarten Armen vom ersten Typ (3) angeordnet ist, **dadurch gekennzeichnet, dass** wenigstens ein Arm vom zweiten Typ (5) eine Länge aufweist, die kleiner ist als diejenige der Arme vom ersten Typ (3), so dass er bei der Montage 1 bis 5 mm oberhalb einer niedrigen Schicht der Decke (11) angeordnet ist.

2. Lampen-Abdeckungseinrichtung nach Anspruch 1, **dadurch gekennzeichnet, dass**
• die Arme vom ersten Typ (3) und die Arme vom zweiten Typ (5) eine Einhüllende zur Abdeckung in der allgemeinen Form einer Glocke definieren, welche ein inneres Volumen bildet, das dazu geeignet ist, die Lampe aufzunehmen, und dass
• die Arme vom zweiten Typ (5) das innere Volumen verschließen.

3. Lampen-Abdeckungseinrichtung nach Anspruch 1 oder 2, **dadurch gekennzeichnet, dass** wenigstens ein Arm vom zweiten Typ (5) teilbar ist.

4. Lampen-Abdeckungseinrichtung nach Anspruch 3, **dadurch gekennzeichnet, dass** wenigstens ein Arm vom zweiten Typ (5) Bruchstellen (25) umfasst.

5. Lampen-Abdeckungseinrichtung nach einem der vorhergehenden Ansprüche, **dadurch gekennzeichnet, dass** wenigstens ein Arm vom zweiten Typ (5) an die Form der Einhüllenden kontinuierlich angepasst ist, die durch die Arme vom ersten Typ (3) definiert ist, wenn die Abdeckungseinrichtung (1) an der Decke montiert ist.

6. Lampen-Abdeckungseinrichtung nach einem der vorhergehenden Ansprüche, **dadurch gekennzeichnet, dass** der Abstand zwischen dem Arm vom zweiten Typ (5) und jedem der benachbarten Arme (3) zwischen einschließlich 1 und 7 mm liegt.

7. Lampen-Abdeckungseinrichtung nach einem der vorhergehenden Ansprüche, **dadurch gekennzeichnet, dass** der wenigstens eine Arm vom zweiten Typ (5) aus einem Gießvorgang mit synthetischem Material in einem Stück mit der Abdeckungseinrichtung (1) hervorgegangen ist.

8. Lampen-Abdeckungseinrichtung nach Anspruch 7, **dadurch gekennzeichnet, dass** das synthetische Material aus nicht entflammbarem Polyamid besteht.

9. Lampen-Abdeckungseinrichtung nach einem der vorhergehenden Ansprüche, **dadurch gekennzeichnet, dass** wenigstens ein Arm vom zweiten Typ (5) längs in zwei oder mehr Teile geschnitten ist.

10. Lampen-Abdeckungseinrichtung nach einem der vorhergehenden Ansprüche, **dadurch gekennzeichnet, dass** wenigstens ein Arm vom zweiten Typ (5) plattenförmig ist.

11. Lampen-Abdeckungseinrichtung nach einem der vorhergehenden Ansprüche, **dadurch gekennzeichnet, dass** die Arme vom ersten Typ keine ähnlichen Formen aufweisen.

12. Lampen-Abdeckungseinrichtung nach einem der vorhergehenden Ansprüche, **dadurch gekennzeichnet, dass** für einen Raum zwischen zwei benachbarten Armen vom ersten Typ kein Arm vom zweiten Typ, ein Arm vom zweiten Typ, zwei Arme vom zweiten Typ oder mehr zwischen zwei benachbarten Armen vom ersten Typ angeordnet sind.

13. Decke, umfassend wenigstens eine Lampen-Abdeckungseinrichtung nach einem der vorhergehenden Ansprüche.

## Claims

1. Lamp capping device intended to be installed in a ceiling (11), comprising a set of branches of a first type (3), spaced apart from one another, said set being suitable for capping the lamp (15), the device (1) further comprising at least one branch of a second type (5) of a form different from that (those) of the branches of the first type (3), that is flexible and arranged in the space between two adjacent branches of the first type (3), **characterized in that** at least one branch of the second type (5) has a shorter length than that of the branches of the first type (3) so as to be positioned on fitting, from 1 to 5 mm above a bottom layer of the ceiling (11).

2. Lamp capping device according to Claim 1, **characterized in that**:
- the branches of the first type (3) and the branches of the second type (5) define a generally bell-shaped capping enclosure, forming an internal volume suitable for housing the lamp, and
- the branches of the second type (5) block the internal volume.

3. Lamp capping device according to Claim 1 or 2, **characterized in that** at least one branch of the second type (5) is divisible.

4. Lamp capping device according to Claim 3, **characterized in that** at least one branch of the second type (5) comprises break points (25).

5. Lamp capping device according to one of the preceding claims, **characterized in that** at least one branch of the second type (5) is formed in continuity of form with the enclosure defined by the branches of the first type (3) when the capping device (1) is mounted on the ceiling.

6. Lamp capping device according to one of the preceding claims, **characterized in that** the distance between the branch of the second type (5) and each of the adjacent branches (3) lies between 1 and 7 mm inclusive.

7. Lamp capping device according to one of the preceding claims, **characterized in that** said at least one branch of the second type (5) is obtained by moulding synthetic material in a single piece with the capping device (1).

8. Lamp capping device according to Claim 7, **characterized in that** the synthetic material is a non-flammable polyamide.

9. Lamp capping device according to one of the preceding claims, **characterized in that** at least one branch of the second type (5) is cut longitudinally into two or more parts.

10. Lamp capping device according to one of the preceding claims, **characterized in that** at least one branch of the second type (5) has the form of a plate.

11. Lamp capping device according to one of the preceding claims, **characterized in that** the branches of the first type do not have similar forms.

12. Lamp capping device according to one of the preceding claims, **characterized in that**, for a space between two adjacent branches of the first type, no branch of the second type, one branch of the second type, two branches of the second type or more are arranged between two adjacent branches of the first type.

13. Ceiling comprising at least one lamp capping device according to one of the preceding claims.
